# EUROPÄISCHE PATENTSCHRIFT

(11) **EP 1 333 259 B1**
(45) Veröffentlichungstag und Bekanntmachung des Hinweises auf die Patenterteilung: **10.02.2010**
(21) Anmeldenummer: 03009102.9
(22) Anmeldetag: 05.03.1998
(51) Int. Cl.: G01J 5/16, G01K 13/00

(54) **Thermopile-Sensor und Strahlungsthermometer mit einem Thermopile-Sensor**
Thermopile sensor and radiation thermometer with a thermopile sensor
Capteur à thermopile et thermomètre à rayonnement avec capteur à thermopile

(30) Priorität: 15.03.1997 DE 19710946
(43) Veröffentlichungstag der Anmeldung: 06.08.2003
(62) Teilanmeldung aus: 98913649.4
(73) Patentinhaber: KAZ Europe SA, 1003 Lausanne (CH)
(72) Erfinder: Kraus, Bernhard, 35619 Braunfels (DE); Beerwerth, Frank, 65594 Runkel-Ennerich (DE)
(74) Vertreter: Grünecker, Kinkeldey, Stockmair & Schwanhäusser Anwaltssozietät

(56) Entgegenhaltungen:
- WO-A-96/08994
- GB-A- 751 758
- US-A- 2 627 530
- US-A- 4 722 612
- US-A- 5 695 283

## Beschreibung

Die Erfindung betrifft einen Thermopile-Sensor mit den Merkmalen des Oberbegriffs des Anspruchs 1 sowie insbesondere ein Strahlungsthermometer oder einen Bewegungsmelder mit einem Thermopile-Sensor.

Aus der US-A-4,722,612 ist ein Infrarot-Thermometer mit Thermopiles bekannt. Das Thermopile ist auf eine scheibenförmige isolierende Folie aufgebracht, wobei die Warmstellen in der Mitte der Folie angeordnet und von den Kaltstellen kreisförmig umgeben sind. Die Folie ist über ein ringförmiges wärmeleitendes Substrat gespannt, wobei sich das Thermopile auf der Oberseite und das Substrat an der Unterseite der Folie befinden. Die Warmstellen des Thermopile liegen im Bereich der zentralen Öffnung des ringförmigen Substrats, wogegen die Kaltstellen des Thermopile in dem Bereich der Folie liegen, der vom Substrat getragen wird. Daher sind bei dem bekannten Thermopile die Kaltstellen thermisch viel besser mit dem Substrat gekoppelt als die Warmstellen und haben deshalb auch eine vielfach höhere Wärmekapazität als die Warmstellen.

Aus der WO 96/08994 A1 ist ein Thermometer zur Messung der Trommelfelltemperatur bekannt, bei dem zwei Thermopileanordnungen zwischen zwei thermisch leitenden Substraten angeordnet sind. In dem ersten Substrat ist eine Strahlungsdurchtrittsöffnung vorgesehen, die Wärmestrahlung zu den Warmstellen einer Thermopileanordnung passieren lässt. Beide Thermopileanordnungen sind auf einer elektrisch isolierenden Schicht zwischen den Substraten angeordnet. Eines der Substrate bildet einen Rahmen, der auf der selben Seite der elektrisch isolierenden Schicht angeordnet ist, auf der auch die Thermopileanordnungen befestigt sind. Die gesamte Anordnung ist darauf ausgelegt, eine gute Wärmeleitung zwischen allen enthaltenen Komponenten zu gewährleisten.

Wenn das bekannte Infrarot-Thermometer bei veränderlichen Umgebungstemperaturen eingesetzt wird, tritt eine Temperaturdifferenz zwischen dem Gehäuse des Infrarot-Thermometers und dem Thermopile-Sensor auf, wodurch sich der zu messenden Wärmestrahlung die Wärmestrahlung des Thermometergehäuses überlagert und die Messung verfälscht. Außerdem tritt dann auch eine Temperaturdifferenz innerhalb des Thermopile-Sensors auf, weil natürlich zuerst das Gehäuse des Thermopile-Sensors aufgrund von Wärmeleitung und/oder Konvektion eine Temperaturänderung erfährt, die sich dann nach innen bis zum Thermopile fortsetzt. Wird beispielsweise das Gehäuse des Thermopile-Sensors durch das Gehäuse des Infrarot-Thermometers erwärmt, erwärmt das Sensorgehäuse sehr schnell die im Thermopile-Sensor befindliche Luft, die ihrerseits aber nur die Warmstellen des Thermopile durch Konvektion erwärmt. Denn bei dem bekannten Thermopile-Sensor sind die Kaltstellen mit dem Substrat thermisch stark gekoppelt, das wegen seiner hohen Wärmekapazität durch die Luft praktisch nicht erwärmt wird. Natürlich wird aber auch das Substrat und somit auch die Kaltstellen erwärmt, jedoch vergleichsweise langsam durch Wärmeleitung vom Gehäuse des Thermopile-Sensors her. Daher ändern sich die Temperaturen der Kalt- und Warmstellen unterschiedlich schnell, d.h. es entstehen auch innerhalb des Thermopile Temperaturgradienten, die die Temperaturmessung verfälschen. Zur Kompensation dieser Meßfehler enthält das bekannte Infrarot-Thermometer zwei baugleiche Thermopiles, von denen das eine der zu messenden Strahlung ausgesetzt ist, das andere jedoch nicht, und die elektrisch gegeneinander geschaltet sind.

Der Erfindung liegt die Aufgabe zugrunde, einen Thermopile-Sensor anzugeben, der bei einfachem Aufbau gegen Temperaturgradienten unempfindlich ist. Ferner ist es Aufgabe der Erfindung ein Strahlungsthermometer mit einem Thermopile-Sensor anzugeben, das bei ebenfalls einfachem Aufbau gegen Schwankungen der Umgebungstemperatur unempfindlich ist.

Die gestellte Aufgabe wird erfindungsgemäß durch einen Thermopile-Sensor nach Anspruch 1 gelöst. Der Thermopile-Sensor so konstruiert ist, daß sich bei Umgebungstemperaturänderungen die Kalt- und Warmstellen des Thermopile gleich schnell erwärmen bzw. abkühlen. Dies wird dadurch erreicht, daß Unterschiede in der Wärmekapazität zwischen den auf einer Halterung angeordneten Kalt- und Warmstellen durch entsprechende Unterschiede in der Wärmeisolation der Kalt- bzw. Warmstellen gegenüber dem Gehäuse ausgeglichen sind, d.h. das Verhältnis aus Wärmekapazität und Wärmeleitfähigkeit im Bereich der Warmstellen ungefähr dem Verhältnis aus Wärmekapazität und Wärmeleitfähigkeit im Bereich der Kaltstellen entspricht. Daher bewirkt ein Wärmetransport vom Sensorgehäuse her eine gleichmäßige Temperaturänderung der Kalt- und Warmstellen, sodaß sich innerhalb des Thermopile keine Temperaturgradienten ausbilden, die die Messung verfälschen könnten. Der Wärmetransport zwischen dem Gehäuse und dem Thermopile erfolgt sowohl durch Wärmeleitung längs der Halterung des Thermopile als auch durch Konvektion und Strahlung. Die Wärmekapazität der Kalt- bzw. Warmstellen setzt sich aus einem durch die Masse und die Materialien der jeweiligen Stelle bestimmten Anteil und einem von der Halterung herrührenden Anteil zusammen.

Der erfindungsgemäße Thermopile-Sensor hat den Vorteil, daß er weder eine aufwendige thermische Stabilisierung durch Kopplung mit isothermischen Körpern großer Wärmekapazität noch aufwendige Korrektureinrichtungen durch beispielsweise ein zweites spannungsmäßig entgegengesetzt geschaltetes Thermopile benötigt. Daher lassen sich mit diesem Thermopile-Sensor sehr kleine, einfache Meßspitzen aufbauen, beispielsweise für Strahlungsthermometer zur Körpertemperaturmessung im Ohr. Der erfindungsgemäße Thermopile-Sensor ist insbesondere auch für Strahlungsthermometer ohne Lichtleiter oder mit einem kurzen oder ins Thermometergehäuse integrierten Lichtleiter geeignet.

Vorzugsweise sind die Kalt- und Warmstellen gegenüber dem Gehäuse des Thermopile-Sensors im wesentlichen gleich gut wärmeisoliert und weisen mit ihrer Halterung auch im wesentlichen dieselbe Wärmekapazität auf. Durch symmetrische Anordnung der Kaltund Warmstellen in Bezug auf das Gehäuse ergibt sich besonders einfach die erwünschte gleichgroße Wärmeisolierung.

Bei einer bevorzugten Ausführung eines erfindungsgemäßen Thermopile-Sensors weist die Halterung eine schlecht wärmeleitende Membran mit vorzugsweise kleiner Wärmekapazität und einen Rahmen auf, der die Membran trägt. Auf der Membran sind sowohl die Kalt- als auch die Warmstellen angeordnet, wobei diese sich in einem Bereich der Membran befinden, der keinen Kontakt mit dem Rahmen hat. Die Membran dient somit auch der Wärmeisolation zwischen den Kalt- und Warmstellen und dem Gehäuse.

Beim erfindungsgemäßen Thermopile-Sensor sind die Warmstellen der zu messenden Strahlung stärker ausgesetzt als die Kaltstellen oder umgekehrt. Dies kann beispielsweise durch eine Blende erreicht werden, die die Kaltstellen im Strahlengang abdeckt, oder dadurch, daß die Kaltstellen mit einer Wärmereflektionsschicht versehen sind, die Warmstellen dagegen mit einer Wärmeabsorptionsschicht. Bei einer anderen Ausführung sind die Kalt- und Warmstellen innerhalb des Gehäuses des Thermopile-Sensors unsymmetrisch angeordnet, sodaß die durch eine Strahlungseintrittsöffnung in den Sensor eintretende Strahlung praktisch nur die Warmstellen erreicht. Vorzugsweise sind jedoch die Kalt- und Warmstellen innerhalb des Gehäuses des Thermopile-Sensors symmetrisch angeordnet aber die Strahlungseintrittsöffnung unsymmetrisch.

Ein erfindungsgemäßes Strahlungsthermometer verwendet den oben kurz beschriebenen Thermopile-Sensor. Der Thermopile-Sensor ist so im Strahlengang des Strahlungsthermometers angeordnet, daß die Warmstellen der zu messenden Strahlung stärker ausgesetzt sind als die Kaltstellen oder umgekehrt. Bei einer bevorzugten Ausführung weist dazu das Strahlungsthermometer Mittel auf, die die Kaltstellen im Strahlengang des Strahlungsthermometers abdecken. Dies kann beispielsweise durch eine Blende geschehen. Bei anderen Ausführungen ist der Thermopile-Sensor im Strahlengang des Strahlungsthermometers unsymmetrisch angeordnet.

Die Erfindung wird nachstehend anhand von Ausführungsbeispielen für Thermopile-Sensoren und ein Infrarot-Thermometer erläutert, die in den Zeichnungen dargestellt sind. Weitere Ausgestaltungen sowie ein Bewegungsmelder sind in der Beschreibung beschrieben. Es zeigen:
- Fig. 1: eine prinzipielle Darstellung eines ersten erfindungsgemäßen Thermopile-Sensorelements;
- Fig. 2: einen Querschnitt durch das Sensorelement nach Fig. 1;
- Fig. 3: eine prinzipielle Darstellung eines zweiten erfindungsgemäßen Thermopile-Sensorelements;
- Fig. 4: einen Querschnitt durch das Sensorelement nach Fig. 3;
- Fig. 5: eine prinzipielle Darstellung eines erfindungsgemäßen Infrarot-Thermometers.

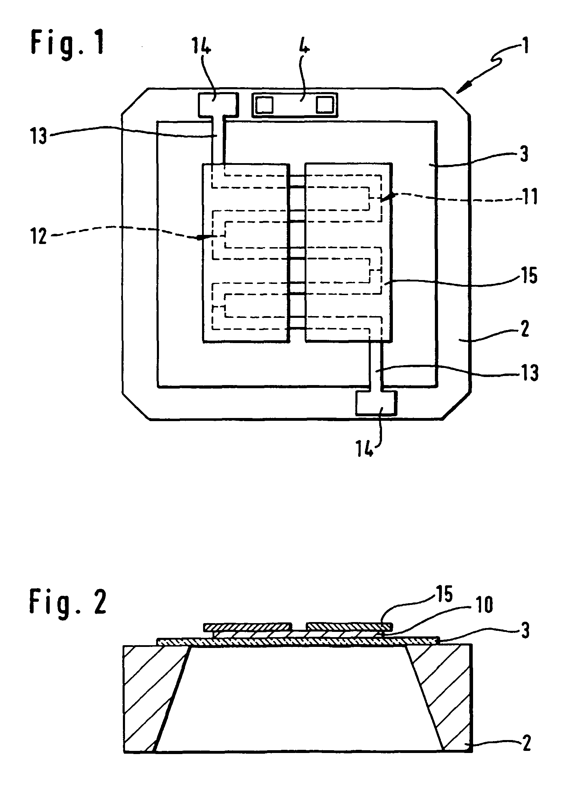

Das in den Figuren 1 und 2 schematisch dargestellte Thermopile-Sensorelement 1 weist einen Rahmen 2 auf, auf dem eine dünne Membran 3 befestigt ist. Auf der Membran befindet sich ein Thermopile 10, d.h. mehrere Thermoelemente, die je eine Kaltstelle 11 und eine Warmstelle 12 aufweisen. Die Kaltstellen sind vom Rahmen ungefähr genau so weit entfernt wie die Warmstellen, wobei sich die Kaltstellen 11 auf der einen Hälfte der Membran 3 befinden, und die Warmstellen 12 auf der anderen Hälfte. Die beiden Hälften sind zumindest im Bereich der Kalt- bzw. Warmstellen mit je einer Absorptionsschicht 15 oder einer gut wärmeleitenden Schicht bedeckt, sodaß sich die Kaltstellen 11 unter der einen und die Warmstellen 12 unter der anderen Schicht befinden. Diese Schichten bewirken eine Erhöhung der Empfindlichkeit des Sensorelements. Die Thermoelemente sind elektrisch hintereinander geschaltet, und über zwei gleich lange Anschlußdrähte 13 mit auf dem Rahmen 2 befindlichen Anschlußpunkten 14 verbunden. Ein Umgebungstemperatursensor 4 ist gut wärmeleitend am Rahmen 2 befestigt.

Die Absorptionsschichten 15 verbessern die Strahlungsabsorption des Thermopile. Bei einer anderen Ausführung eines erfindungsgemäßen Thermopile-Sensorelements sind nur die Warmstellen 12 mit einer Absorptionsschicht bedeckt, bei einer weiteren die Warmstellen 12 mit einer Absorptionsschicht und die Kaltstellen 11 mit einer Wärmereflektionsschicht bedeckt.

Bei einem nicht in den Figuren dargestellten Ausführungsbeispiel eines erfindungsgemäßen Thermopile-Sensorelements sind die Thermoelemente gleichmäßig über praktisch die gesamte Fläche der Membran verteilt, d.h. die Warm- und Kaltstellen liegen jeweils dicht nebeneinander. Auf diese Weise lassen sich besonders viele Thermoelemente auf einer relativ kleinen Membran unterbringen, da die Verbindungsleiter zwischen den Kalt- und Warmstellen sehr kurz gehalten sein können. Die Warmstellen sind einzeln oder mehrere nebeneinanderliegende Warmstellen mit einer gemeinsamen Wärmeabsorptionsschicht bedeckt, wogegen die Kaltstellen einzeln oder mehrere nebeneinanderliegende Kaltstellen mit einer gemeinsamen Wärmereflektionsschicht bedeckt sind.

Die Membran besteht vorzugsweise aus einem schlecht wärmeleitenden Material und weist außerdem eine geringe Wärmekapazität auf. Durch die symmetrische Anordnung der Kalt- und Warmstellen auf der Membran erfolgt bei einer Erwärmung des Rahmens durch die wenn auch nur geringe Wärmeleitfähigkeit der Membran eine gleichmäßige Erwärmung der Kalt- und Warmstellen, sodaß allein aufgrund der erfindungsgemäßen Anordnung der Kalt- und Warmstellen allenfalls sehr kleine Temperaturgradienten innerhalb der Thermoelemente des Thermopile auftreten können.

Die Membran 3 ist vorzugsweise dünner als 1µm und besteht überwiegend aus Siliziumoxid und Siliziumnitrid oder Siliziumoxinitrid. Die Thermoelemente bestehen beispielsweise aus Poly-Silizium/Aluminium oder p-Poly-Silizium/n-Poly-Silizium. Der Rahmen 2 besteht vorzugsweise aus Silizium. Er kann daher als Substrat für elektronische Bauelemente dienen; beispielsweise können auf dem Rahmen Verstärker zur Verstärkung der vom Thermopile abgegebenen Signale ausgebildet sein. Da diese Verstärker eine gewisse Verlustwärme erzeugen, sind sie symmetrisch zum Thermopile auf dem Rahmen plaziert, sodaß sie keine Wärmegradienten im Thermopile hervorrufen können.

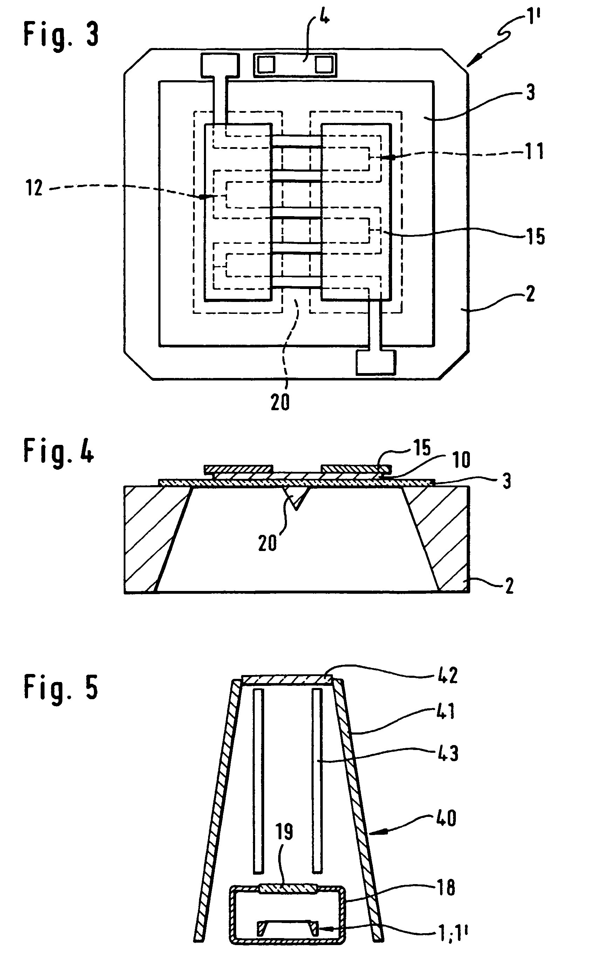

In den Figuren 3 und 4 ist ein anderes erfindungsgemäßes Thermopile-Sensorelement 1' schematisch dargestellt, der sich von dem in den Figuren 1 und 2 dargestellten Thermopile-Sensorelement 1 nur durch einen Steg 20 unterscheidet, der unter der Membran 3 zwischen den Kalt- und Warmstellen angeordnet ist. Bei einer bevorzugten Ausführung ist der Steg 20 wärmeleitend mit dem Rahmen 2 verbunden, oder Teil des Rahmens 2. Durch diesen Steg wird die Wärmeleitung zwischen den Kalt- und Warmstellen herabgesetzt, und dadurch das dynamische Verhalten des Sensors verbessert. Außerdem erhöht der Steg 20 die mechanische Stabilität der Membran 3, indem er sie in der Mitte abstützt.

Bei einer anderen Ausführung der oben beschriebenen Thermopile-Sensorelemente sind zur Erhöhung der Empfindlichkeit die Kalt- und/oder Warmstellen vergrößert ausgebildet im Vergleich zu den Verbindungsleitern.

Das in Fig. 5 schematisch dargestellte Strahlungsthermometer 40 weist ein Gehäuse 41 mit einem strahlungsdurchlässigen Fenster 42 auf, von dem ausgehend sich ein Lichtleiter 43 ins Innere des Gehäuses 41 zu einem Thermopile-Sensor hin erstreckt. Besonders vorteilhaft ist es, wenn der Lichtleiter 43 bis direkt an den Thermopile-Sensor heranreicht, sodaß dieser nur den Lichtleiter 43 sieht. Dadurch können Meßfehler vermieden werden, die durch Strahlung hervorgerufen werden, die von Gehäuseteilen emittiert wird, die sich auf einer anderen Temperatur befinden als der Thermopile-Sensor. Ferner kann beispielsweise durch Vergolden auch die Emissivität des Lichtleiters 43 verkleinert werden.

Der Thermopile-Sensor weist ein Gehäuse 18 mit einem strahlungsdurchlässigen Fenster 19 auf, in dem sich ein Thermopile-Sensorelement 1, 1' befindet. Die zu detektierende Strahlung wird so auf das Thermopile-Sensorelement 1, 1' geleitet, daß der überwiegende Teil der Strahlung auf die Warmstellen des Thermopile auftrifft, und somit eine Temperaturdifferenz zwischen den Warm- und Kaltstellen des Thermopile entsteht, was ein entsprechendes Sensorausgangssignal erzeugt. Dazu sind entweder im oder am Thermopile-Sensor (in Fig. 5 nicht dargestellte) geeignete Mittel vorgesehen, die die Kaltstellen des Thermopile abdecken, oder das Thermopile-Sensorelement 1, 1' ist im Gehäuse 18 hinter dem Fenster 19 entsprechend unsymmetrisch, d.h. seitlich verschoben angeordnet, sodaß die einfallende Strahlung sie nicht erreichen kann. Bei einer anderen Ausführung ist der Thermopile-Sensor entsprechend unsymmetrisch, d.h. seitlich verschoben am Ende des Lichtleiters 43 angeordnet.

Ein vollständig symmetrischer Aufbau des Strahlengangs eines Strahlungsthermometers ist bei Verwendung des oben beschriebenen Thermopile-Sensorelements möglich, bei dem die Warmstellen mit einer anderen Schicht versehen sind als die Kaltstellen. Besonders vorteilhaft ist es, die Warmstellen mit einer Absorptionsschicht und die Kaltstellen mit einer Reflexionsschicht zu versehen.

Bei einem in den Figuren nicht dargestellten Bewegungsmelder wird das Thermopile-Sensorelement mit Blenden und/oder mit fokussierenden Elementen versehen, sodaß ein warmes oder kaltes Objekt, das sich vor dem Fenster vorbeibewegt, abwechselnd von den Kalt- und den Warmstellen des Sensorelements gesehen wird, und somit ein entsprechendes Sensorausgangssignal entsteht. Der prinzipielle Aufbau und die Funktionsweise entspricht einem Bewegungsmelder mit zwei in Serie geschalteten Thermopile-Sensorelementen. Allerdings ist der erfindungsgemäße Sensor einfacher und preiswerter, und überdies die Empfindlichkeit der beiden Sensorhälften identisch.

## Patentansprüche

1. Thermopile-Sensor (1) mit einem Gehäuse (18), einem Thermopile (10) mit mindestens einer Kalt- (11) und mindestens einer Warmstelle (12), und einer Halterung für die Kalt-(11) und die Warmstellen (12), die eine Membran (3) und einen Rahmen (2) aufweist, der die Membran (3) trägt, und die Kalt- (11) und Warmstellen (12) auf der Membran (3) angeordnet sind und sich ein einem Bereich der Membran (3) befinden, der keinen Kontakt mit dem Rahmen (2) hat,
**dadurch gekennzeichnet,**
**dass** die Kaltstellen (11) und die Warmstellen (12) obenseitig an der Membran (3) angeordnet sind und der Rahmen (2) unterhalb an der Membran (3) angeordnet ist.

2. Thermopile-Sensor (1) nach Anspruch 1,
**dadurch gekennzeichnet,**
**dass** die Kalt- und Warmstellen (11,12) symmetrisch auf der Membran (3) angeordnet sind, d.h. Thermoelemente gleichmäßig über die Membran (3) verteilt sind.

3. Thermopile-Sensor (1') nach Anspruch 1,
**dadurch gekennzeichnet,**
**dass** zwischen den Kaltstellen (11) und den Warmstellen (12) eine Wärmesenke (20) ausgebildet ist, die mit dem Rahmen (2) wärmeleitend verbunden ist oder Teil des Rahmens (2) ist.

4. Thermopile-Sensor (1) nach einem der vorhergehenden Ansprüche,
**dadurch gekennzeichnet,**
**dass** die Membran (3) überwiegend aus Siliziumoxid und Siliziumnitrid oder Siliziumoxinitrid und der Rahmen (2) im wesentlichen aus Silizium besteht und eine kleine Wärmekapazität und eine kleine Wärmeleitfähigkeit aufweist.

5. Thermopile-Sensor (1) nach einem der vorhergehenden Ansprüche,
**dadurch gekennzeichnet,**
**dass** auf dem Rahmen (2) elektronische Schaltkreise, beispielsweise Verstärker, angeordnet sind.

6. Thermopile-Sensor (1) nach einem der vorhergehenden Ansprüche,
**dadurch gekennzeichnet,**
**dass** die Warmstellen (12) und die Kaltstellen (11) gleich gut gegenüber dem Gehäuse wärmeisoliert sind und zusammen mit ihrer Halterung auch dieselbe Wärmekapazität aufweisen.

7. Thermopile-Sensor (1) nach einem der vorhergehenden Ansprüche,
**dadurch gekennzeichnet,**
**dass** auf die Warmstellen (12) eine Wärmeabsorptionsschicht oder eine gut wärmeleitende Schicht aufgebracht ist.

8. Thermopile-Sensor (1) nach einem der vorhergehenden Ansprüche,
**dadurch gekennzeichnet,**
**dass** auf die Kaltstellen (11) eine Wärmereflektionsschicht aufgebracht ist.

9. Thermopile-Sensor (1) nach einem der vorhergehenden Ansprüche,
**dadurch gekennzeichnet,**
**dass** die Kalt- und Warmstellen (11, 12) symmetrisch innerhalb des Gehäuses (18) angeordnet sind.

10. Thermopile-Sensor (1) nach einem der vorhergehenden Ansprüche,
**dadurch gekennzeichnet,**
**dass** entweder die Kalt- (11) und Warmstellen (12) oder ein Strahlungseintrittsfenster (19) unsymmetrisch im Gehäuse (18) angeordnet sind.

11. Thermopile-Sensor (1) nach Anspruch 10,
**dadurch gekennzeichnet,**
**dass** auf die Kaltstellen (11) eine Wärmeabsorptionsschicht oder eine gut wärmeleitende Schicht aufgebracht ist.

12. Thermopile-Sensor (1) nach einem der vorhergehenden Ansprüche,
**dadurch gekennzeichnet,**
**dass** mit der Halterung ein Umgebungstemperatursensor (4) wärmeleitend verbunden ist.

13. Strahlungsthermometer mit einem Thermopile-Sensor (1, 1') nach einem der Ansprüche 1 bis 12 oder 18.

14. Strahlungsthermometer nach Anspruch 13,
**dadurch gekennzeichnet,**
**dass** der Thermopile-Sensor (1) so im Strahlengang des Strahlungsthermometers angeordnet ist, dass die Warmstellen (12) der zu messenden Strahlung stärker ausgesetzt sind als die Kaltstellen (11) oder umgekehrt.

15. Strahlungsthermometer nach Anspruch 14,
**dadurch gekennzeichnet,**
**dass** Mittel vorhanden sind, die die Kaltstellen (11) im Strahlengang des Strahlungsthermometers abdecken.

16. Strahlungsthermometer nach Anspruch 14,
**dadurch gekennzeichnet,**
**dass** der Thermopile-Sensor (1) unsymmetrisch im Strahlengang des Strahlungsthermometers angeordnet ist.

17. Bewegungsmelder mit mindestens einem Thermopile-Sensor (1) nach einem der Ansprüche 1 bis 12 oder 18.

18. Thermopile-Sensor (1) nach einem der Ansprüche 1 bis 12, **dadurch gekennzeichnet, dass** sich bei Umgebungstemperaturänderungen die Kalt-(11) und Warmstellen (12) des Thermopile (10) gleich schnell erwärmen bzw. abkühlen.

## Claims

1. Thermopile sensor (1) having a housing (18), a thermopile (10) with at least one cold spot (11) and at least one hot spot (12), and a holder for the cold spots (11) and hot spots (12), which comprises a membrane (3) and a frame (2) that carries the membrane (3), and the cold spots (11) and hot spots (12) are arranged on the membrane (3) and are located in an area of the membrane (3) that has no contact with the frame (2),
**characterised in that**
the cold spots (11) and hot spots (12) are arranged on the top side of the membrane (3) and the frame (2) is arranged underneath on the membrane (3).

2. Thermopile sensor (1) according to claim 1,
**characterised in that**
the cold and hot spots (11, 12) are arranged symmetrically on the membrane (3), i.e. thermocouples are distributed uniformly over the membrane (3).

3. Thermopile sensor (1') according to claim 1,
**characterised in that**
between the cold spots (11) and the hot spots (12) is formed a heat sink (20) which is connected to the frame (2) in heat-conducting manner or is part of the frame (2).

4. Thermopile sensor (1) according to one of the preceding claims,
**characterised in that**
the membrane (3) consists predominantly of silicon oxide and silicon nitride or silicon oxynitride and the frame (2) consists essentially of silicon and has a low heat capacity and a low heat conductivity.

5. Thermopile sensor (1) according to one of the preceding claims,
**characterised in that**
electronic circuits, for example amplifiers, are arranged on the frame (2).

6. Thermopile sensor (1) according to one of the preceding claims,
**characterised in that** the hot spots (12) and the cold spots (11) are equally well thermally insulated against the housing and together with their holder also have the same heat capacity.

7. Thermopile sensor (1) according to one of the preceding claims,
**characterised in that**
a heat absorption layer or a good heat-insulating layer is applied to the hot spots (12).

8. Thermopile sensor (1) according to one of the preceding claims,
**characterised in that**
a heat reflecting layer is applied to the cold spots (11).

9. Thermopile sensor (1) according to one of the preceding claims,
**characterised in that**
the cold and hot spots (11, 12) are arranged symmetrically within the housing (18).

10. Thermopile sensor (1) according to one of the preceding claims,
**characterised in that**
either the cold spots (11) and hot spots (12) or a radiation entry window (19) are arranged asymmetrically in the housing (18).

11. Thermopile sensor (1) according to claim 10,
**characterised in that**
a heat absorption layer or a good heat-insulating layer is applied to the cold spots (11).

12. Thermopile sensor (1) according to one of the preceding claims,
**characterised in that**
an ambient temperature sensor (4) is connected in heat-conducting manner to the holder.

13. Pyrometer having a thermopile sensor (1, 1') according to one of claims 1 to 12 or 18.

14. Pyrometer according to claim 13,
**characterised in that**
the thermopile sensor (1) is arranged in the beam path of the pyrometer such that the hot spots (12) are more exposed to the radiation that is to be measured than the cold spots (11) or *vice versa.*

15. Pyrometer according to claim 14,
**characterised in that**
means are provided that cover the cold spots (11) in the beam path of the pyrometer.

16. Pyrometer according to claim 14,
**characterised in that**
the thermopile sensor (1) is arranged asymmetrically in the beam path of the pyrometer.

17. Motion detector having at least one thermopile sensor (1) according to one of claims 1 to 12 or 18.

18. Thermopile sensor (1) according to one of claims 1 to 12, **characterised in that** in the event of changes in the ambient temperature the cold spots (11) and hot spots (12) of the thermopile (10) heat up or cool down, respectively, at the same rate.

## Revendications

1. Capteur à thermopile (1), comportant un boîtier (18), une thermopile (10) avec au moins un point froid (11) et au moins un point chaud (12), et un support pour les points froids (11) et les points chauds (12), qui comporte une membrane (3) et un cadre (2) qui porte la membrane (3), et les points froids (11) et les points chauds (12) sont disposés sur la membrane (3) et se situent dans une zone de la membrane (3) qui n'entre pas en contact avec le cadre (2),
**caractérisé en ce que** les points froids (11) et les points chauds (12) sont disposés sur la face supérieure de la membrane (3) et le cadre (2) est disposé en dessous de la membrane (3).

2. Capteur à thermopile (1) selon la revendication 1, **caractérisé en ce que** les points froids (11) et les points chauds (12) sont disposés symétriquement sur la membrane (3), c'est-à-dire que les thermocouples sont répartis uniformément au-dessus de la membrane (3).

3. Capteur à thermopile (1') selon la revendication 1, **caractérisé en ce qu'**entre les points froids (11) et les points chauds (12) est réalisé un puits de chaleur (20), qui est relié au cadre (2) par une liaison thermoconductrice ou constitue une partie du cadre (2).

4. Capteur à thermopile (1) selon l'une quelconque des revendications précédentes, **caractérisé en ce que** la membrane (3) est réalisée essentiellement en oxyde de silicium et nitrure de silicium ou en oxynitrure de silicium, et le cadre (2) est réalisé, pour l'essentiel, en silicium et comporte une faible capacité thermique et une faible conductivité thermique.

5. Capteur à thermopile (1) selon l'une quelconque des revendications précédentes, **caractérisé en ce que** des circuits de commande électroniques, par exemple des amplificateurs, sont disposés sur le cadre (2).

6. Capteur à thermopile (1) selon l'une quelconque des revendications précédentes, **caractérisé en ce que** les points chauds (12) et les points froids (11) ont la même bonne isolation thermique par rapport au boîtier et, conjointement avec leur support, possèdent la même capacité thermique.

7. Capteur à thermopile (1) selon l'une quelconque des revendications précédentes, **caractérisé en ce qu'**une couche d'absorption de chaleur ou une couche avec une bonne thermoconduction est déposée sur les points chauds (12).

8. Capteur à thermopile (1) selon l'une quelconque des revendications précédentes, **caractérisé en ce qu'**une couche de réflexion de chaleur est déposée sur les points froids (11).

9. Capteur à thermopile (1) selon l'une quelconque des revendications précédentes, **caractérisé en ce que** les points froids (11) et les points chauds (12) sont disposés symétriquement à l'intérieur du boîtier (18).

10. Capteur à thermopile (1) selon l'une quelconque des revendications précédentes, **caractérisé en ce que** soit les points froids (11) et les points chauds (12), soit une fenêtre d'entrée de rayonnement (19) sont disposés de manière non symétrique dans le boîtier (18).

11. Capteur à thermopile (1) selon la revendication 10, **caractérisé en ce qu'**une couche d'absorption de chaleur ou une couche avec une bonne thermoconduction est déposée sur les points froids (11).

12. Capteur à thermopile (1) selon l'une quelconque des revendications précédentes, **caractérisé en ce qu'**un capteur de température ambiante (4) est relié par liaison thermoconductrice avec le support.

13. Thermomètre à rayonnement, comportant un capteur à thermopile (1, 1') selon l'une quelconque des revendications 1 à 12 ou 18.

14. Thermomètre à rayonnement selon la revendication 13, **caractérisé en ce que** le capteur à thermopile (1) est disposé dans la trajectoire de rayonnement du thermomètre à rayonnement, de telle sorte que les points chauds (12) sont plus fortement exposés au rayonnement à mesurer que les points froids (11) ou inversement.

15. Thermomètre à rayonnement selon la revendication 14, **caractérisé en ce qu'**il est prévu des moyens qui couvrent les points froids (11) dans la trajectoire de rayonnement du thermomètre à rayonnement.

16. Thermomètre à rayonnement selon la revendication 14, **caractérisé en ce que** le capteur à thermopile (1) est disposé de manière non symétrique dans la trajectoire de rayonnement du thermomètre à rayonnement.

17. Capteur de mouvement, comportant au moins un capteur à thermopile (1) selon l'une quelconque des revendications 1 à 12 ou 18.

18. Capteur à thermopile (1) selon l'une quelconque des revendications 1 à 12, **caractérisé en ce qu'**en présence de variations de la température ambiante, les points froids (11) et les points chauds (12) de la thermopile (10) se chauffent ou se refroidissement à la même vitesse.
